# EUROPÄISCHE PATENTSCHRIFT

(11) **EP 2 415 341 B1**
(45) Veröffentlichungstag und Bekanntmachung des Hinweises auf die Patenterteilung: **15.03.2017**
(21) Anmeldenummer: 11164773.1
(22) Anmeldetag: 04.05.2011
(51) Int. Cl.: A01D 43/08

(54) **Antrieb für eine Überladeeinrichtung einer landwirtschaftlichen Erntemaschine**
Drive for an excess load device of an agricultural harvester
Entraînement pour un dispositif de surcharge d'une moissonneuse agricole

(30) Priorität: 02.08.2010 DE 102010036801
(43) Veröffentlichungstag der Anmeldung: 08.02.2012
(73) Patentinhaber: CLAAS Saulgau GmbH, 88348 Bad Saulgau (DE)
(72) Erfinder: Laumeier, Ludger, 33378, Rheda-Wiedenbrück (DE); Look, Stefan, 47533, Kleve (DE)

(56) Entgegenhaltungen:
- EP-A1- 0 492 195
- FR-A1- 2 622 945
- Beitz Grote: "Taschenbuch für den Maschinenbau", Springer Verlag, Berlin ISBN: 3-540-67777-1 * page 51 *

## Beschreibung

Die Erfindung betrifft einen Antrieb für eine gegenüber einem Maschinenrahmen einer landwirtschaftlichen Erntemaschine beweglich gelagerte Überladeeinrichtung gemäß Oberbegriff des Anspruchs 1. Daneben betrifft die Erfindung ein Verfahren zum Betreiben eines Antriebs gemäß Oberbegriff des Anspruchs 11.

Landwirtschaftliche Erntemaschinen, insbesondere selbstfahrende Feldhäcksler, weisen eine Überladeeinrichtung auf, mit der sich das gehäckselte Erntegut auf ein Transportfahrzeug verladen lässt. Dies geschieht bei Feldhäckslern in der Regel während der Erntefahrt, indem das Transportfahrzeug parallel neben oder hinter dem Feldhäcksler mitfährt und das vom Feldhäcksler gehäckselte Erntegut durch eine am Feldhäcksler angeordnete Überladeeinrichtung auf das Transportfahrzeug geworfen wird. Die Überladeeinrichtung, zumeist als sogenannter Auswurfkrümmer ausgeführt, lässt sich zur Steuerung des Erntegutstrahls mittels eines Antriebs gegenüber dem Maschinenrahmen des Feldhäckslers bewegen.

Zumeist ist die Überladeeinrichtung beispielsweise um eine in etwa vertikale Achse drehbar gegenüber dem Maschinenrahmen des Feldhäckslers gelagert. Eine vorteilhafte Art des Antriebs der Überladeeinrichtung stellt dabei ein Schneckengetriebe dar, wobei der Überladeeinrichtung in diesem Fall ein als Drehkranz ausgeführtes Zahnrad (Schneckenrad) zugeordnet ist, das von einer am Maschinenrahmen gehaltenen Schnecke angetrieben wird, die in das Zahnrad eingreift. Zum Antrieb der Schnecke dient beispielsweise ein Hydraulik- oder Elektromotor.

Beim Erntebetrieb kann es aufgrund unterschiedlicher Ereignisse zu Kollisionen des Auswurfkrümmers mit festen oder beweglichen Hindernissen wie Bäumen, Gebäuden etc. bzw. anderen Maschinen oder Fahrzeugen kommen. Zur Vermeidung von Beschädigungen an der Überladeeinrichtung, der übrigen Maschine bzw. des Hindernisses ist es erforderlich, für solche Fälle einen Überlastschutz vorzusehen, der die Bewegung des Auswurfkrümmers bei Überschreiten einer Grenzbelastung freigibt.

In bekannter Weise ist dazu, wie beispielsweise in EP 0 492 195 beschrieben, die Schneckenwelle derartig beweglich am Maschinengehäuse gelagert, dass diese im Überlastfall außer Eingriff vom Schneckenrad gerät. Konstruktiv ist die Schneckenwelle dazu auf einem Träger montiert, der gegenüber dem Maschinenrahmen beweglich, in EP 0 492 195 zum Beispiel schwenkbar, gelagert ist. Durch Bewegen des Trägers lässt sich die Schneckenwelle von einem Eingriffszustand mit dem Schneckenrad in einen Nichteingriffszustand (und umgekehrt) bringen.

Aus der FR 2 622 945 ist ein Antrieb der eingangs genannten Art bekannt.

Zur Gewährleistung eines sicheren und spielfreien Eingriffs zwischen Schneckenwelle und Schneckenrad bei Normalbetrieb des Feldhäckslers kommt ein als Haltemittel dienendes Federelement zum Einsatz, dessen Rückstellkraft die Schnecke gegen das Schneckenrad drückt. Die zur Drehung des Auswurfkrümmers erforderliche Antriebskraft kann so übertragen werden. Durch das Andrücken der Schnecke gegen das Schneckenrad ist daneben ein Spielausgleich geschaffen.

Wirkt auf den Auswurfkrümmer - zum Beispiel im Kollisionsfall - eine übermäßig hohe Kraft, so bewirken die an Schneckenrad und Schnecke angreifenden Reaktionskräfte, dass die Schnecke - gegen die Rückstellkraft des Federelements - aus dem Eingriffszustand mit dem Schneckenrad herausgedrückt wird. Das Schneckenrad - und damit der Auswurfkrümmer - kann sich nun frei drehen und den durch das Hindernis ausgelösten Kollisionskräften nachgeben, so dass Beschädigungen weitgehend vermieden werden.

Ein stetiger Trend zur Leistungssteigerung bei Feldhäckslern führt zur Verwendung immer längerer Auswurfkrümmer. Da längere Auswurfkrümmer einen längeren Hebelarm bezüglich des beschriebenen Drehantriebs darstellen, muss die Überlastsicherung auf eine höhere Auslösekraft eingestellt werden, da im Kollisionsfall höhere Kräfte auf den Antrieb wirken.

Auch im allgemeinen Betrieb muss die Auslöseschwelle bei längeren - und damit schwereren - Auswurfkrümmern höher eingestellt sein als bei herkömmlichen, um Fehlauslösungen zu verhindern, die beispielsweise bereits durch Fahrt in Hanglage oder durch am Auswurfkrümmer angreifenden Windlasten verursacht werden können.

Bislang ist die Auslöseschwelle konstruktiv einfach dadurch erhöht worden, dass die als Haltemittel dienende Rückstellfeder stärker vorgespannt wurde bzw. eine Rückstellfeder mit höherer Federsteifigkeit verwendet wurde. Dies hat den Nachteil, dass die Schnecke schon bei Normalbetrieb mit einer verhältnismäßig hohen Kraft gegen das Schneckenrad gedrückt wird. Dadurch erhöht sich die erforderliche Antriebsleistung des Getriebes und es tritt starker Verschleiß an den beteiligten Getriebekomponenten, insbesondere an Schneckenrad und Schnecke auf.

Es ist daher eine Aufgabe der vorliegenden Erfindung einen Antrieb der eingangs genannten Art anzugeben, der bei Gewährleistung einer hohen Auslösekraft für den Überlastfall im Normalbetrieb einen verringerten Verschleiß aufweist. Daneben soll ein Verfahren zum Betreiben eines solchen Antriebs angegeben werden.

Zur Lösung dieser Aufgabe ist erfindungsgemäß vorgesehen, dass die für den Antrieb vorgesehenen Haltemittel betreibbar sind, eine mit Auslenkung des Antriebselements aus dem Eingriffszustand progressiv zunehmende Haltekraft auszuüben. Die erfindungsgemäß vorgesehenen Haltemittel gewährleisten damit, dass bei Normalbetrieb relativ geringe Kräfte zwischen Antriebs- und Abtriebselement wirken, was zu einem geringen Verschleiß der beteiligten Komponenten führt und Reibungsverluste verringert, dass aber für den Überlastfall eine verhältnismäßig hohe Auslösekraft aufgebracht werden kann, was zum Betrieb großer Überladeeinrichtungen erforderlich ist. Als mit der Auslenkung progressiv zunehmende Haltekraft ist dabei jeder Verlauf der Haltekraft zu verstehen, der sich in irgendeiner Weise überproportional entwickelt, d.h. stärker zunimmt als bei beispielsweise einer einfachen Feder mit linearer (Hook'scher) Federkennlinie. Konstruktiv lässt sich dies auf unterschiedliche Weisen realisieren.

Gemäß einer vorteilhaften Weiterbildung der Erfindung sind das Antriebselement und das Abtriebselement Übertragungsglieder eines Schneckengetriebes, wodurch sich hohe Untersetzungen sowie eine Selbsthemmung erzielen lassen. Zweckmäßigerweise ist dabei das Antriebselement als motorisch angetriebene Schnecke, das Abtriebselement als der Überladeeinrichtung zugeordnetes Schneckenrad, insbesondere in Form eines Drehkranzes ausgeführt.

Zur Realisierung einer Überlastsicherung und zur gleichzeitigen Schaffung eines Spielausgleichs ist das Antriebselement vorteilhaft an einem schwenkbaren Träger gelagert. Durch Schwenken des Trägers lässt sich das Antriebselement von einem Eingriffs- in einen Nichteingriffszustand mit dem Abtriebselement bringen. Die Schwenkachse kann unterschiedlich ausgerichtet sein, beispielsweise etwa parallel zur Schneckenachse oder etwa parallel zur Schneckenradachse.

Konstruktiv bietet es sich an, dass die Haltemittel zumindest ein zwischen Antriebselement und Maschinenrahmen wirkendes, elastisch verformbares Element umfassen. Durch diese Maßnahme ist auf einfache Weise sichergestellt, dass mit Auslenkung des Antriebselements aus einem Eingriffszustand das zumindest eine elastisch verformbare Element verformt wird, wodurch Rückstellkräfte entstehen, welche die erforderliche Haltekraft aufbringen bzw. dazu beitragen können.

In weiterhin vorteilhafter Weiterbildung der Erfindung umfassen die Haltemittel eine Anordnung von zumindest zwei elastisch verformbaren Elementen. Durch Anordnung von zumindest zwei derartigen Elementen lassen sich - abhängig von der Art der Anordnung - unterschiedliche Effekte erzielen, die im Rahmen der Erfindung Vorteile aufweisen.

Eine einen progressiven Verlauf der Haltekraft bewirkende Anordnung sieht beispielsweise vor, dass die zumindest zwei elastisch verformbaren Elemente so angeordnet sind, dass sich ein erstes elastisch verformbares Element bereits ab Auslenkung des Antriebselements aus dem Eingriffzustand verformt, ein zweites elastisch verformbares Element jedoch erst ab Erreichen einer bestimmten Auslenkung des Antriebselements aus dem Eingriffszustand verformt. Weisen beide Elemente beispielsweise eine lineare Federkennlinie auf, so wird durch diese Anordnung ein - in Zusammenwirkung beider Elemente - progressiver Haltekraftverlauf geschaffen, bei dem die Haltekraft innerhalb eines ersten Auslenkbereichs des Antriebselements weniger stark zunimmt als in einem zweiten Auslenkbereich.

Zweckmäßigerweise können die zumindest zwei elastisch verformbaren Elemente parallel wirkend angeordnet sein. Bei paralleler Wirkung addieren sich die Kräfte (bzw. Federsteifigkeiten) der elastisch verformbaren Elemente.

Eine weitere vorteilhafte Ausgestaltung der Erfindung sieht vor, dass zumindest ein elastisch verformbares Element in dessen Rückverformungsverhalten veränderbar ist. Dies kann im Fall einer Feder beispielsweise durch Änderung deren Vorspannung erfolgen. Alternativ kann zumindest ein elastisch verformbares Element austauschbar angeordnet sein, um durch ein Element mit anderem Rückverformungsverhalten (insbesondere anderer Federkennlinie) ersetzt werden zu können.

Gemäß einer konstruktiv einfachen Ausführung ist das zumindest eine elastisch verformbare Element eine Feder. Es kann sich dabei um unterschiedliche Arten von Federn handeln, insbesondere sind dabei verschiedene Beanspruchungsarten (Druck, Torsion, Zug) und Bauarten denkbar.

Zur Festlegung einer bestimmten Anfangskraft kann es zweckmäßig sein, dass zumindest eine Feder vorgespannt ist. Besonders vorteilhaft kann eine erst bei einer bestimmten Auslenkung des Antriebselements zur Wirkung kommende Feder vorgespannt sein, wodurch sich die Auslösekraft der Überlastsicherung auf einfache Weise auf einen hohen Wert festlegen lässt. Die Haltekraft entwickelt sich in diesem Fall aufgrund der Vorspannung sprunghaft.

Die zuvor genannte Aufgabe wird daneben durch ein Verfahren gemäß Oberbegriff des Anspruchs 11 gelöst, das sich dadurch auszeichnet, dass die mittels der Haltemittel ausübbare Haltekraft an die jeweilige Betriebssituation der Erntemaschine angepasst wird, wobei eine mit Auslenkung des Antriebselements aus dem Eingriffszustand progressiv zunehmende Haltekraft ausgeübt wird. Ganz allgemein ermöglicht das erfindungsgemäße Verfahren damit eine Anpassung der Haltekraft an unterschiedliche Betriebsbedingungen. Zur Schonung der Eingriffselemente des Antriebs kann demnach bei geringen zu erwartenden Angriffskräften auf den Antrieb dieser mit geringer Haltekraft betrieben werden. Sind dagegen aufgrund unterschiedlichster Ursachen höhere Angriffskräfte zu erwarten, wird eine höhere Haltekraft aufgebracht, um einen ungewollte Eingriffsverlust zwischen An- und Abtriebselement (also eine Fehlauslösung der Überlastsicherung) zu vermeiden. Die Auslösekraft ist damit beeinflussbar.

Die jeweilige für die Anpassung der Haltekraft relevante Betriebssituation wird vorteilhaft durch zumindest einen Betriebsparameter der Erntemaschine und/oder der betrieblichen Umgebung der Erntemaschine vorgegeben. Bei einem Betriebsparameter der Erntemaschine kann es sich beispielsweise um die Größe, das Gewicht der Überladeeinrichtung, die Erntegutart, die Erntegutmenge, die Erntegutbeschaffenheit, die Fahrgeschwindigkeit, die Beschleunigung, die Verzögerung, den Lenkeinschlag etc. oder eine Kombination mehrerer dieser Parameter handeln. Bei einem Betriebsparameter der betrieblichen Umgebung der Erntemaschine kann es sich beispielsweise um die Hangneigung, die sonstige Geländebeschaffenheit, Windlasten, zu erwartende Hindernisse etc. oder eine Kombination mehrerer dieser Parameter handeln.

Vorteilhaft ist zumindest ein Sensor zur Erfassung eines Betriebsparameters vorgesehen und/oder wird zumindest ein Betriebsparameter beispielsweise aus einer bordeigenen Datenverarbeitungsanlage abgerufen oder wird manuell vom Bediener der Erntemaschine eingegeben. So könnte beispielsweise an der Erntemaschine eine Eingabeeinrichtung vorgesehen sein, an welcher der Bediener die Länge bzw. Größe der aktuell verwendeten Überladeeinrichtung eingibt. Zweckmäßigerweise greift dann eine Steuereinrichtung auf diese Information zurück, um entsprechend des eingegebenen - oder alternativ per Sensor erfassten oder auf sonstige Weise abgerufenen Werts - die Haltekraft einzustellen.

Gemäß einer alternativen Weiterbildung der Erfindung können die Haltemittel eine zwischen Antriebselement und Maschinenrahmen wirkende Zylinder-Kolbenanordnung umfassen, die mittels eines Druckmediums über eine Steuereinrichtung mit Druck beaufschlagt wird. Die Haltekraft wird in diesem Fall also hydraulisch oder pneumatisch aufgebracht, wobei sich deren Höhe - je nach Bedarf - mittels der Steuereinrichtung dosieren lässt.

Es ist ebenfalls denkbar, dass die Haltemittel eine Kombination aus zumindest einem elastisch verformbaren Element und einer Zylinder-Kolbenanordnung umfassen. Die Haltekraft kann in diesem Fall kombiniert aufgebracht werden, wobei sich ein durch die Zylinder-Kolbenanordnung aufgebrachter Kraftanteil in vorteilhafter Weise verändern lässt, um eine komfortable Anpassung an die verschiedenen Betriebssituationen zu ermöglichen.

Es sei darauf hingewiesen, dass sich die erfindungsgemäßen Effekte und Wirkungen nicht auf selbstfahrende Feldhäcksler beschränken, sondern entsprechend auf Überladeeinrichtungen anderer landwirtschaftlicher Erntemaschinen (z.B. Mähdrescher) anwendbar sein können.

Die Erfindung wird im Folgenden unter Hinweis auf die beigefügten Figuren anhand eines Ausführungsbeispiels näher erläutert. Daraus ergeben sich auch weitere Einzelheiten und Vorteile der Erfindung. Es zeigen:
- Fig. 1: eine schematische Seitenansicht eines Feldhäckslers,
- Fig. 2: einen erfindungsgemäßen Antrieb in Seitenansicht,
- Fig. 3: den Antrieb aus Fig. 2 in Ansicht von hinten,
- Fig. 4: eine Darstellung gemäß Schnittlinie A-A aus Fig. 3.

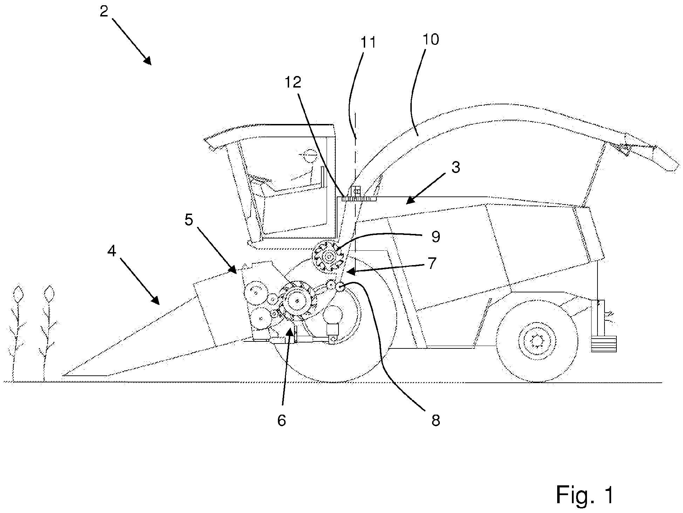

In Fig. 1 zeigt eine selbstfahrende Erntemaschine in Form eines Feldhäckslers 2. Der Feldhäcksler 2 baut auf einen Maschinenrahmen 3 auf und verfügt über ein nicht näher bezeichnetes Fahrwerk mit Vorder- und Hinterrädern. Im Erntebetrieb mäht der Feldhäcksler 2 auf einem Feld stehenden Pflanzenbestand mittels eines Vorsatzgeräts 4 vom Feld und führt diesen einem Einzugsorgan 5 zu. Nach einer dort vorgenommenen Vorpressung zwischen Einzugswalzenpaaren durchläuft das Erntegut eine rotierende, mit Messern besetzte Häckseltrommel 6, die das Erntegut in Zusammenwirkung mit einer Gegenschneide zerkleinert. Der Häckseltrommel 6 schließt sich ein aufsteigender Förderschacht 7 an, den das Erntegut nach oben durchläuft um eine mit Crackerwalzen versehene Konditioniereinrichtung 8 und anschließend einen Nachbeschleuniger 9 zu durchlaufen, der das Erntegut beschleunigt und aus dem Förderschacht 7 in eine als Auswurfkrümmer ausgeführte Überladeeinrichtung 10 fördert. Aus der Überladeeinrichtung 10 wird das Erntegut ausgeworfen, um beispielsweise auf ein Transportfahrzeug verladen zu werden.

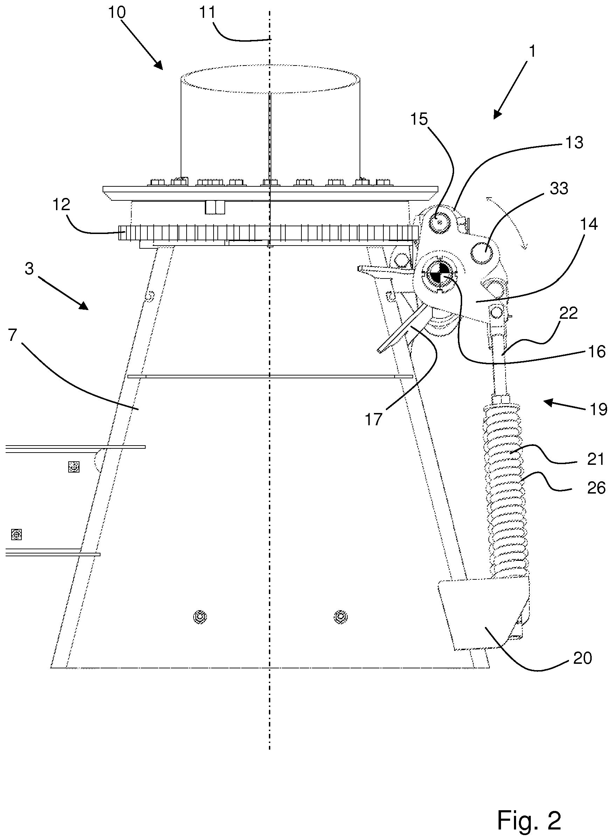

Die Überladeeinrichtung 10 weist gemäß Fig. 1, die eine Transportstellung zeigt, zum Heck des Feldhäckslers 2. Da die Überladeeinrichtung 10 um eine in etwa vertikale Drehachse 11 gegenüber dem Maschinenrahmen 3 schwenkbar ist, kann die Überladeeinrichtung 10 während der Erntefahrt verschwenkt werden, um die Richtung des austretenden Erntegutstrahls steuern zu können. Ein Drehkranz 12 ist drehfest mit der Überladeeinrichtung 10 verbunden und dient als Abtriebselement eines nachfolgend anhand der Fig. 2 bis 4 beschriebenen erfindungsgemäßen Antriebs.

Fig. 2 zeigt in Seitenansicht das einzige Ausführungsbeispiel eines erfindungsgemäßen Antriebs 1. Dargestellt ist das obere Ende eines Förderschachts 7, der Teil eines Maschinenrahmens 3 eines Feldhäckslers ist. Der Feldhäcksler kann im Aufbau dem in Fig. 1 beschriebenen Feldhäcksler 2 gleichen.

Gemäß Fig. 2 mündet der Förderschacht 7 in das maschinenseitige Ende einer Überladeeinrichtung 10. Drehfest an der Überladeeinrichtung 10 ist ein Drehkranz 12 befestigt, der mit der Überladeeinrichtung 10 um eine vertikale Drehachse 11 drehbar ist. Zur Drehung der Überladeeinrichtung 10 um die Drehachse 11 dient ein erfindungsgemäßer Antrieb 1, der eine auf einer motorisch angetriebenen Antriebswelle 15 sitzende Antriebsschnecke 13 umfasst, die zum Antrieb der Überladeeinrichtung 10 in den Drehkranz 12 eingreift, um eine formschlüssige Antriebsverbindung herzustellen.

Die Antriebsschnecke 13 wird mittels der Antriebswelle 15 an einem Schneckenträger 14 gehalten, der wiederum um eine quer zur Drehachse 11 verlaufende Schwenkachse 16 schwenkbar gegenüber einem am Förderschacht 7 befestigten Lagerbock 17 gelagert ist. Der Schneckenträger 14 und damit auch die Antriebsschnecke 13 sind damit um die Schwenkachse 16 beweglich, wie durch den gekrümmten Doppelpfeil angedeutet. Durch Schwenken des Schneckenträgers 14 lässt sich die Antriebsschnecke 13 von einem Eingriffszustand mit dem Drehkranz 12 (gezeigt in Fig. 2) in einen Nichteingriffszustand (nicht gezeigt) - und umgekehrt - bewegen.

Zur Aufrechterhaltung eines Eingriffszustands der Antriebsschnecke 13 sind zwischen der Antriebsschnecke 13 und dem Förderschacht 7 wirkende Haltemittel 19 vorgesehen. Diese umfassen unter anderem eine erste Druckfeder 21 und eine zweite Druckfeder 26, die sich über einen ersten Druckstab 22 bzw. einen zweiten Druckstab 27 (in Fig. 2 verdeckt, daher nicht zu sehen) an einem an den Förderschacht 7 angeschweißtes Gegenlager 20 abstützen und parallel wirkend angeordnet sind. Aufgrund deren noch näher zu beschreibender Anordnung üben die Druckfedern 21 und 26 in Zusammenwirkung eine mit Auslenkung der Antriebsschnecke 13 aus einem Eingriffszustand progressiv zunehmende Haltekraft auf die Antriebsschnecke 13 aus.

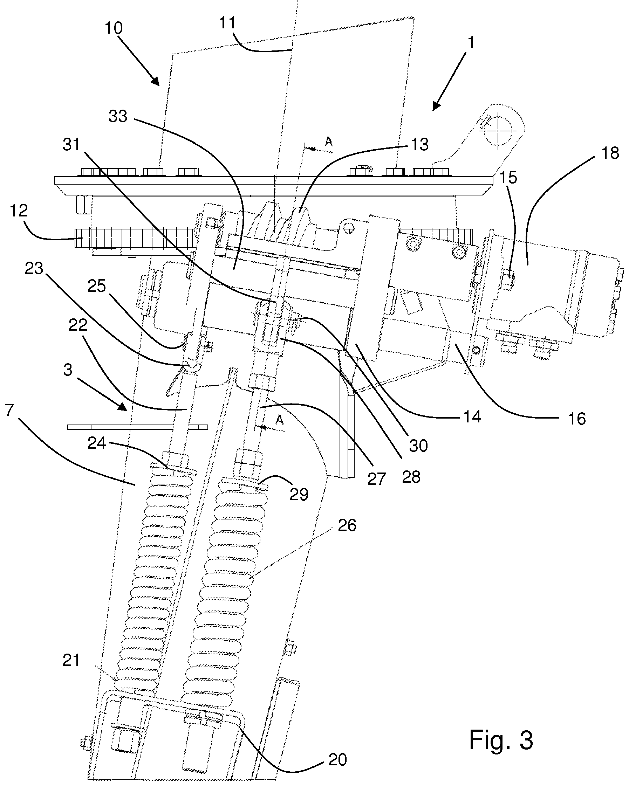

Zur genaueren Erläuterung der Funktionsweise zeigt Fig. 3 eine Ansicht des erfindungsgemäßen Antriebs 1 von hinten.

Die in Fig. 3 gezeigten Maschinenelemente entsprechen im Wesentlichen den bereits zu Fig. 2 erläuterten. Ist in Fig. 3 ist zusätzlich die zweite Druckfeder 26 mit zweitem Druckstab 27 vollständig zu sehen sowie ein Hydromotor 18, der die Antriebswelle 15 antreibt. Weiterhin ist zu sehen, dass der erste Druckstab 22 und der zweite Druckstab 27 jeweils an ihrem dem Schneckenträger 14 zugewandten Ende in einen Gabelkopf 23 (bzw. 28) münden, der mittels eines Bolzens 25 (bzw. 30) am Schneckenträger 14 angelenkt ist. Der Gabelkopf 23 des ersten Druckstabs 22 ist mittels eines Bolzens 25 drehgelenkig mit dem Schneckenträger 14 verbunden.

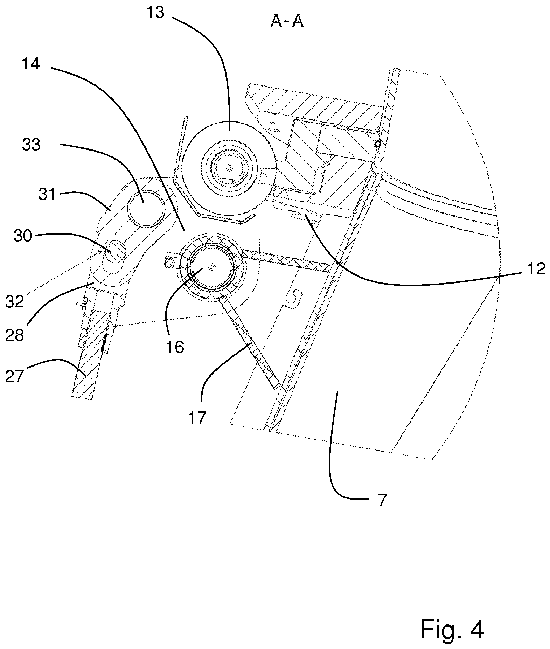

Wie Fig. 4 zeigt, die eine Schnittdarstellung gemäß Linie A-A in Fig. 3 ist, wird dagegen der Gabelkopf 28 des zweiten Druckstabs 27 mittels eines Bolzens 30 in einem Langloch 32 gehalten, das in einer am Schneckenträger 14 mittels eines Bolzens 33 befestigten Lochplatte 31 ausgebildet ist. Der Bolzen 30 ist daher innerhalb des durch das Langloch 32 vorgegebenen Spiels gegenüber der Lochplatte 31 beweglich. Dementsprechend ist auch der zweite Druckstab 27 gegenüber dem Schneckenträger 14 innerhalb des gleichen Spiels beweglich.

Es ergibt sich folgende Funktionsweise des erfindungsgemäßen Antriebs 1. Im Normalbetrieb, d.h. ohne Einwirkung ungewöhnlich hoher Kräfte auf die Überladeeinrichtung 10, befindet sich die Schnecke 13 in einem Eingriffszustand mit dem Drehkranz 12, wie in Fig. 2 und 3 gezeigt. Die erste Druckfeder 21, die zwischen dem Gegenlager 20 und einer Scheibe 24 mit einer Vorspannung eingespannt ist, übt über dem ersten Druckstab 22 eine Druckkraft aus, die über den Gabelkopf 23 und den Bolzen 25 in den Schneckenträger 14 eingeleitet wird. Diese außerhalb der Schwenkachse 16 des Schneckenträgers 14 angreifende Druckkraft übt auf den Schneckenträger 14 ein (gemäß Fig. 2 linksgerichtetes) Drehmoment aus, so dass Schneckenträger 14 die Schnecke 13 gegen den Drehkranz 12 drückt. Die Kraft, mit der die Schnecke 13 gegen den Drehkranz 12 gedrückt wird, ist gerade so hoch, dass ein Spielausgleich zwischen der Schnecke 13 und dem Drehkranz 12 stattfindet und die für den Antrieb der Überladeeinrichtung 10 erforderlichen Antriebskräfte übertragen werden können. Im diesem Normalbetriebszustand übt die zweite Druckfeder 26 keine Kraft auf den Schneckenträger 14 aus.

Mit zunehmender auf den Antrieb 1 wirkender Übertragungskraft wird die Schecke 13 von dem in Fig. 2 gezeigten Eingriffszustand, bei dem zwischen Schnecke 13 und Drehkranz 12 ein minimal möglicher Abstand besteht, aufgrund zunehmender Eingriffskräfte radial vom Drehkranz 12 weggedrückt und daher zunehmend aus dem Zustand mit minimalem Abstand zwischen Schnecke 13 und Drehkranz 12 ausgelenkt. Der Schneckenträger 14 dreht sich dabei (in Fig. 2 rechtsseitig) gegen die Federkraft der ersten Druckfeder 21. Innerhalb eines gewissen Auslenkungsbereichs besteht dabei weiterhin Eingriff zwischen Schnecke 13 und Drehkranz 12.

Erst ab Erreichen einer bestimmten Auslenkung des Schneckenträgers 14 kommt die zweite Druckfeder 26 zur Wirkung. Dieser Zustand ist in Fig. 4 gezeigt, wo der Bolzen 30 das obere Ende des Langlochs 32 der Lochplatte 31 erreicht. Mit jeder darüber hinausgehenden Auslenkung des Schneckenträgers 14 wird also nicht nur die erste Druckfeder 21, sondern zusätzlich auch die zweite Druckfeder 26 verformt. Da sich nun die Rückstellkräfte der beiden Druckfedern 21, 26 addieren, wird ab dem in Fig. 4 gezeigten Auslenkungsgrad eine deutlich erhöhte Haltekraft auf die Schnecke 13 ausgeübt. Vorteilhafterweise befindet sich die Schnecke 13 im Auslenkungszustand gemäß Fig. 2 noch immer im Eingriff.

Die zweite Druckfeder 26 ist vorgespannt und weist eine höhere Federsteifigkeit auf als die erste Druckfeder 21. Dies bewirkt, dass die Haltekraft der Federanordnung ab Erreichen des Eingriffs der zweiten Druckfeder 26 sprunghaft und mit weiterhin zunehmender Auslenkung auch stärker ansteigt als im Wirkungsbereich nur der ersten Druckfeder 21.

Die vorteilhafte Wirkung ist, dass die Schnecke 13 erst ab Überschreiten hoher auf den Antrieb wirkender Kräfte aus dem Eingriffszustand in einen Nichteingriffszustand gerät. Die Auslösekraft für die Überlastsicherung ist also deutlich erhöht und kann insbesondere durch Wahl einer bestimmten Vorspannung und Federkennlinie der zweiten Druckfeder 26 individuell auf eine gewünschte Höhe eingestellt werden.

In der Praxis ergeben sich verschiedene Vorteile. Während des Normalbetriebs kann der Antrieb mit geringer Haltekraft betrieben werden, die durch die Federcharakteristik und mögliche Vorspannung der ersten Druckfeder vorgegeben wird. Es bestehen im Normalbetrieb geringer Verschleiß der Getriebekomponenten sowie geringe Antriebsverluste.

Daneben kann eine hohe Auslösekraft für die Überlastsicherung aufgebracht werden, was insbesondere bei Verwendung langer bzw. schwerer Überladeeinrichtungen wünschenswert ist, um Fehlauslösungen - beispielsweise bei starker Hangneigung, Windlasten etc. - zu vermeiden.

In vorteilhafter Ausführung lassen sich die Vorspannungen der ersten und zweiten Druckfeder jeweils einstellen, um eine genaue Anpassung an die jeweiligen Anforderungen vornehmen zu können. Zur präzisen Einstellung einer Auslösekraft für die Überlastsicherung ist insbesondere eine Einstellbarkeit der Vorspannung der zweiten Druckfeder 26 zweckmäßig. Dies kann, wie in Fig. 3 durch Doppelmuttern angedeutet, durch stufenlose Änderung der Einspannlänge der Druckfeder 26 erfolgen. Alternativ können zur Längenänderung der Einspannung bedarfsweise (nicht gezeigte) Distanzhülsen zum Einsatz kommen.

**Bezugszeichenliste**

| | | | |
|---|---|---|---|
| 1 | Antrieb | 21 | erste Druckfeder |
| 2 | Feldhäcksler | 22 | erster Druckstab |
| 3 | Maschinenrahmen | 23 | Gabelkopf |
| 4 | Vorsatzgerät | 24 | Scheibe |
| 5 | Einzugsorgan | 25 | Bolzen |
| 6 | Häckseltrommel | 26 | zweite Druckfeder |
| 7 | Förderschacht | 27 | zweiter Druckstab |
| 8 | Konditioniereinrichtung | 28 | Gabelkopf |
| 9 | Nachbeschleuniger | 29 | Scheibe |
| 10 | Überladeeinrichtung | 30 | Bolzen |
| 11 | Drehachse | 31 | Lochplatte |
| 12 | Drehkranz | 32 | Langloch |
| 13 | Antriebsschnecke | 33 | Bolzen |
| 14 | Schneckenträger | | |
| 15 | Antriebswelle | | |
| 16 | Schwenkachse | | |
| 17 | Lagerbock | | |
| 18 | Hydromotor | | |
| 19 | Haltemittel | | |
| 20 | Gegenlager | | |

## Patentansprüche

1. Antrieb (1) für eine gegenüber einem Maschinenrahmen (3) einer landwirtschaftlichen Erntemaschine (2) beweglich gelagerte Überladeeinrichtung (10), umfassend ein am Maschinenrahmen (3) positionsbeweglich gelagertes Antriebselement (13), das zum Antrieb der Überladeeinrichtung (10) mit einem der Überladeeinrichtung (10) zugeordneten Abtriebselement (12) in Eingriff bringbar ist, und Haltemittel (19), die auf das Antriebselement (13) eine der Auslenkung aus einem Eingriffszustand entgegenwirkende Haltekraft ausüben,
**dadurch gekennzeichnet, dass** die Haltemittel (19) betreibbar sind, eine mit Auslenkung des Antriebselements (13) aus dem Eingriffszustand progressiv zunehmende Haltekraft auszuüben.

2. Antrieb nach Anspruch 1, **dadurch gekennzeichnet, dass** das Antriebselement (13) und das Abtriebselement (12) Übertragungsglieder eines Schneckengetriebes sind.

3. Antrieb nach Anspruch 1 oder 2, **dadurch gekennzeichnet, dass** das Antriebselement (13) an einem schwenkbaren Träger (14) gelagert ist.

4. Antrieb nach einem der Ansprüche 1 bis 3, **dadurch gekennzeichnet, dass** die Haltemittel (19) zumindest ein zwischen Antriebselement (13) und Maschinenrahmen (3) wirkendes, elastisch verformbares Element (21, 26) umfassen.

5. Antrieb nach einem der Ansprüche 1 bis 4, **dadurch gekennzeichnet, dass** die Haltemittel (19) eine Anordnung von zumindest zwei elastisch verformbaren Elementen (21, 26) umfassen.

6. Antrieb nach Anspruch 5, **dadurch gekennzeichnet, dass** die zumindest zwei elastisch verformbaren Elemente (21, 26) zur Erzielung einer progressiv zunehmenden Haltekraft derart angeordnet sind, dass sich ein erstes Element (21) bereits ab Auslenkung des Antriebselements (13) aus dem Eingriffszustand verformt, ein zweites Element (26) jedoch erst ab Erreichen einer bestimmten Auslenkung des Antriebselements (13) aus dem Eingriffszustand verformt.

7. Antrieb nach Anspruch 5 oder 6, **dadurch gekennzeichnet, dass** die zumindest zwei elastisch verformbaren Elemente (21, 26) parallel wirkend angeordnet sind.

8. Antrieb nach einem der Ansprüche 1 bis 7, **dadurch gekennzeichnet, dass** zumindest ein elastisch verformbares Element (21, 26) in dessen Rückverformungsverhalten veränderbar ist oder austauschbar angeordnet ist, um durch ein Element mit anderem Rückverformungsverhalten ersetzt werden zu können.

9. Antrieb nach einem der Ansprüche 4 bis 8, **dadurch gekennzeichnet, dass** das zumindest eine elastisch verformbare Element (21, 26) eine Feder ist.

10. Antrieb nach Anspruch 9, **dadurch gekennzeichnet, dass** die zumindest eine Feder (21, 26) vorgespannt ist.

11. Verfahren zum Betrieben eines Antriebs einer gegenüber einem Maschinenrahmen (3) einer landwirtschaftlichen Erntemaschine (2) beweglich gelagerten Überladeeinrichtung (10), insbesondere eines Antriebs (1) nach einem der vorigen Ansprüche, wobei der Antrieb ein am Maschinenrahmen (3) positionsbeweglich gelagertes Antriebselement (13), das zum Antrieb der Überladeeinrichtung (10) mit einem der Überladeeinrichtung (10) zugeordneten Abtriebselement (12) in Eingriff gebracht wird, und Haltemittel (19) umfasst, die auf das Antriebselement (13) eine der Auslenkung aus einem Eingriffszustand entgegenwirkende Haltekraft ausüben können,
**dadurch gekennzeichnet, dass** die mittels der Haltemittel (19) ausübbare Haltekraft an die jeweilige Betriebssituation der Erntemaschine (2) angepasst wird, wobei eine mit Auslenkung des Antriebselements (13) aus dem Eingriffszustand progressiv zunehmende Haltekraft ausgeübt wird.

12. Verfahren nach Anspruch 11, **dadurch gekennzeichnet, dass** die Betriebssituation durch zumindest einen Betriebsparameter der Erntemaschine (2) und/oder der betrieblichen Umgebung der Erntemaschine (2) vorgegeben wird.

13. Verfahren nach Anspruch 11 oder 12, **dadurch gekennzeichnet, dass** die Haltemittel eine zwischen Antriebselement und Maschinenrahmen wirkende Zylinder-Kolbenanordnung umfassen, die mittels eines Druckmediums über eine Steuereinrichtung mit Druck beaufschlagt wird.

14. Verfahren nach Anspruch 13, **dadurch gekennzeichnet, dass** die Haltemittel eine Kombination aus zumindest einem elastisch verformbaren Element und einer Zylinder-Kolbenanordnung umfassen.

## Claims

1. A drive (1) for a transloading device (10) mounted movably in relation to a machine frame (3) of an agricultural harvester (2) including a drive element (13) which is mounted movably in position on the machine frame (3) and which for driving the transloading device (10) can be brought into engagement with a drive output element (12) associated with the transloading device (10), and holding means (19) which exert on the drive element (13) a holding force acting in opposition to deflection out of an engagement condition,
**characterised in that** the holding means (191) are operable to exert a holding force which increases progressively with the deflection of the drive element (13) out of the engagement condition.

2. A drive according to claim 1 **characterised in that** the drive element (13) and the drive output element (12) are transmission members of a worm gear.

3. A drive according to claim 1 or claim 2 **characterised in that** the drive element (13) is mounted to a pivotable carrier (14).

4. A drive according to one of claims 1 to 3 **characterised in that** the holding means (19) include at least one elastically deformable element (21, 26) acting between the drive element (13) and the machine frame (3).

5. A drive according to one of claims 1 to 4 **characterised in that** the holding means (19) include an arrangement of at least two elastically deformable elements (21, 26).

6. A drive according to claim 5 **characterised in that** the at least two elastically deformable elements (21, 26) for producing a progressively increasing holding force are so arranged that a first element (21) is already deformed as from deflection of the drive element (13) out of the engagement condition but a second element (26) is deformed only as from the attainment of a given deflection of the drive element (13) out of the engagement condition.

7. A drive according to claim 5 or claim 6 **characterised in that** the at least two elastically elements (21, 26) are arranged to act in parallel.

8. A drive according to one of claims 1 to 7 **characterised in that** at least one deformable element (21, 26) is variable in its return deformation characteristic or is arranged interchangeably in order to be able to be replaced by an element with another return deformation characteristic

9. A drive according to one of claims 4 to 8 **characterised in that** the at least one deformable element (21, 26) is a spring.

10. A drive according to claim 9 **characterised in that** the at least one spring (21, 26) is prestressed.

11. A method of operating a drive (1) of a transloading device (10) mounted movably in relation to a machine frame (3) of an agricultural harvester (2), in particular a drive (1) according to one of the preceding claims, wherein the drive (1) includes a drive element (13) which is mounted movably in position on the machine frame (3) and which for driving the transloading device (10) is brought into engagement with a drive output element (12) associated with the transloading device (10), and holding means (19) which exert on the drive element (13) a holding force acting in opposition to deflection out of an engagement condition,
**characterised in that** the holding force exerted by the holding means (19) is adapted to the respective operating situation of the harvester (2) wherein a holding force which increases progressively with the deflection of the drive element (13) out of the engagement condition is exerted.

12. A method according to claim 11 **characterised in that** the operating situation is predetermined by at least one operating parameter of the harvester (2) and/or the operating environment of the harvester (2).

13. A method according to claim 11 or claim 12 **characterised in that** the holding means include a piston-cylinder arrangement acting between the drive element and the machine frame, which is subjected to pressure by means of a pressure medium by way of a control device.

14. A method according to claim 13 **characterised in that** the holding means include a combination of at least one elastically deformable element and a piston-cylinder arrangement.

## Revendications

1. Entraînement (1) pour un dispositif de déchargement (10) monté mobile par rapport à un châssis de machine (3) d'une machine agricole de récolte (2), comprenant un élément d'entraînement (13) qui est monté mobile en position sur le châssis de machine (3) et qui peut être mis en prise avec un élément de sortie (12) associé au dispositif de déchargement (10) pour entraîner le dispositif de déchargement (10), et des moyens de maintien (19) qui exercent sur l'élément d'entraînement (13) une force de maintien s'opposant à la déviation par rapport à un état de prise, **caractérisé en ce que** les moyens de maintien (19) peuvent être actionnés pour exercer une force de maintien progressivement croissante avec la déviation de l'élément d'entraînement (13) par rapport à l'état de prise.

2. Entraînement selon la revendication 1, **caractérisé en ce que** l'élément d'entraînement (13) et l'élément de sortie (12) sont des éléments de transmission d'un engrenage à vis sans fin.

3. Entraînement selon l'une des revendications 1 ou 2, **caractérisé en ce que** l'élément d'entraînement (13) est monté sur un support pivotant (14).

4. Entraînement selon l'une des revendications 1 à 3, **caractérisé en ce que** les moyens de maintien (19) comprennent au moins un élément déformable élastiquement (21, 26) agissant entre l'élément d'entraînement (13) et le châssis de machine (3).

5. Entraînement selon l'une des revendications 1 à 4, **caractérisé en ce que** les moyens de maintien (19) comprennent un agencement d'au moins deux éléments déformables élastiquement (21, 26).

6. Entraînement selon la revendication 5, **caractérisé en ce que** lesdits au moins deux éléments déformables élastiquement (21, 26) sont disposés, pour atteindre une force de maintien progressivement croissante, de sorte qu'un premier élément (21) se déforme dès la déviation de l'élément d'entraînement (13) par rapport à l'état de prise, tandis qu'un deuxième élément (26) se déforme seulement à partir du moment où une déviation définie de l'élément d'entraînement (13) par rapport à l'état de prise est atteinte.

7. Entraînement selon l'une des revendications 5 ou 6, **caractérisé en ce que** lesdits au moins deux éléments déformables élastiquement (21, 26) sont disposés de manière à agir parallèlement.

8. Entraînement selon l'une des revendications 1 à 7, **caractérisé en ce qu'**au moins un élément déformable élastiquement (21, 26) est modifiable dans son comportement de retour élastique ou est disposé de manière échangeable afin de pouvoir être remplacé par un élément présentant un autre comportement de retour élastique.

9. Entraînement selon l'une des revendications 4 à 8, **caractérisé en ce que** ledit au moins un élément déformable élastiquement (21, 26) est un ressort.

10. Entraînement selon la revendication 9, **caractérisé en ce que** ledit au moins un ressort (21, 26) est précontraint.

11. Procédé de fonctionnement d'un entraînement d'un dispositif de déchargement (10) monté mobile par rapport à un châssis de machine (3) d'une machine agricole de récolte (2), en particulier d'un entraînement (1) selon l'une des revendications précédentes, l'entraînement comprenant un élément d'entraînement (13) qui est monté mobile en position sur le châssis de machine (3) et qui peut être mis en prise avec un élément de sortie (12) associé au dispositif de déchargement (10) pour entraîner le dispositif de déchargement (10), et des moyens de maintien (19) qui peuvent exercer sur l'élément d'entraînement (13) une force de maintien s'opposant à la déviation par rapport à un état de prise, **caractérisé en ce que** la force de maintien pouvant être exercée à l'aide des moyens de maintien (19) est adaptée à la situation de fonctionnement respective de la machine de récolte (2), une force de maintien progressivement croissante avec la déviation de l'élément d'entraînement (13) par rapport à l'état de prise étant exercée.

12. Procédé selon la revendication 11, **caractérisé en ce que** la situation de fonctionnement est déterminée par au moins un paramètre de fonctionnement de la machine de récolte (2) et/ou de l'environnement de fonctionnement de la machine de récolte (2).

13. Procédé selon l'une des revendications 11 ou 12, **caractérisé en ce que** les moyens de maintien comprennent un agencement à cylindre et piston qui agit entre l'élément d'entraînement et le châssis de machine et qui est soumis à une pression à l'aide d'un fluide sous pression par l'intermédiaire d'un dispositif de commande.

14. Procédé selon la revendication 13, **caractérisé en ce que** les moyens de maintien comprennent une combinaison d'au moins un élément déformable élastiquement et d'un agencement à cylindre et piston.
